# EUROPÄISCHE PATENTSCHRIFT

(11) **EP 0 947 452 B1**
(45) Veröffentlichungstag und Bekanntmachung des Hinweises auf die Patenterteilung: **21.05.2003**
(21) Anmeldenummer: 99105864.5
(22) Anmeldetag: 23.03.1999
(51) Int. Cl.: B65G 45/16, B65G 45/12

(54) **Vorrichtung zur Reinigung von Förderbändern**
Cleaning device for conveyor belts
Dispositif de nettoyage pour bandes transporteuses

(30) Priorität: 31.03.1998 DE 19814416
(43) Veröffentlichungstag der Anmeldung: 06.10.1999
(73) Patentinhaber: Maschinenbau Krumscheid GmbH, 53547 Breitscheid (DE)
(72) Erfinder: Krumscheid, Gregor, 53547 Rossbach/Reifert (DE)
(74) Vertreter: Kloiber, Thomas

(56) Entgegenhaltungen:
- WO-A-94/29203
- GB-A- 2 040 249
- US-A- 4 877 122
- US-A- 5 622 249

## Beschreibung

Die Erfindung betrifft eine Vorrichtung zur Reinigung von Förderbändern, die für stark verschmutzende Schüttgüter, wie nasse Kohle, Lehm oder dergleichen vorgesehen sind, gemäß dem Oberbegriff des Patentanspruchs 1.

Bekannt sind solche Vorrichtungen in der Form von Abstreifern.

Fördergurtanbackungen kommen ungleichmäßig über die Bandbreite und die Bandlänge vor. Sie haften ungleichmäßig fest am Band; auch sind sie hinsichtlich ihrer Schichtdicke ungleichmäßig.

Sogenannte Vorkopfabstreifer sind Abstreifer, die an der Gurtabwurfstelle direkt unter der Abwurfparabel an der Antriebsrolle angebracht sind; sie entfernen die Anbackungen am Fördergurt mehr oder weniger intensiv. Querabstreifer an der Abwurfstelle sind häufig.

Solche in der Praxis bekannte Querabstreifer lassen sich unterteilen in solche, die eine intensivere und solche, die eine weniger intensive Reinigung bewirken. Heute durchgesetzt hat sich vor allen Dingen der sog. Lamellenabstreifer als Querabstreifer. Aber auch dieser Abstreifer erfüllt die gestellte Aufgabe nur bedingt. Er besteht aus einem Stahlgehäuse oder einer Achse, die auf die Länge hin mit mehreren flachen Lamellen bzw. Modulen bestückt ist. Diese sind federnd gelagert und rufen somit einen unterschiedlichen Anpressdruck hervor, der aber nur auf der jeweiligen Spurbreite gleichmäßig ist.

Der Anpressdruck des Förderbandes gegen die Antriebstrommel ist, bedingt durch die große Zugkraft der Trommel, sehr hoch, wodurch schon relativ geringe Erhöhungen oder Vertiefungen im Band die Lamellen immer nur am höchsten Punkt der Unebenheit angreifen lassen. Kann eine Verkrustung auf dem Band durch die Lamellen nicht gelöst werden, oder ist das Band durch aufgebrachte Flicken nicht so repariert, dass die Bandoberfläche völlig eben ist, so wird im Umgebungsbereich der anhaftende Schmutz auf dem Band nicht abgestreift. Ist darüber hinaus das Band noch durch Vertiefungen (Rillen oder abgelöste obere Bandschichtdeckblätter) beschädigt, so bleibt die Verschmutzung auch dort haften.

Das Gleiche ist zu befürchten, wenn die Antriebstrommel ungleichmäßig verschlissen ist und dadurch die Bandoberfläche im Bereich der Abstreifer nicht eben ist. Um das Förderband nach links und rechts wandern zu lassen, werden die Antriebstrommeln oft ballig ausgeführt, d.h. ihr Durchmesser nimmt von der Mitte zu den Enden hin ab, d.h. die Antriebstrommel ist in der Mitte am höchsten. Bei solchen ballig ausgebildeten Trommeln ist eine Reinigung mit Standardquerabstreifern überhaupt nicht zu erreichen.

Aus der WO 94/29203 ist eine Abstreifervorrichtung für Förderbänder bekannt, bei der ein Abstreiferelement mittels einer fernsteuerbaren pneumatischen Kolben-Zylinder-Einheit von unten gegen ein Förderband andrückbar ist. Eine automatische Steuervorrichtung ist mit einem Sensor verbunden, der größere Unebenheiten des Förderbandes, insbesondere Verbindungselemente, im Bereich des Abstreifers erkennt. Der Abstreifer wird dann vom Förderband abgehoben, damit er nicht vorzeitig verschleißt. Eine vollständige Reinigung des Förderbandes von Anbackungen ist so nicht möglich.

Aus der GB 2 040 249 A ist eine Vorrichtung bekannt, bei der ein plattenförmiges Abstreiferelement mittels einer elastischen Druckkammer senkrecht zur Förderbandrichtung an ein Förderband angedrückt wird. Dabei erfolgt der Andruck in einer Richtung, die genau in der Plattenebene des Abstreiferelements liegt. Diese Anordnung hat den Nachteil, dass sich das Abstreiferelement trotz der elastischen Druckkammer nicht an kleinere Unebenheiten des Förderbandes anpassen kann, weil eine Durchbiegung des Abstreiferelements senkrecht zum Förderband und parallel zur Plattenebene nicht möglich ist.

Aufgabe der Erfindung ist es, eine Reinigungsvorrichtung anzugeben, deren Reinigungswirkung bei unebenen Förderbändern und/oder nach ungleichmäßigem Verschleiß verbessert ist.

Die Erfindung löst diese Aufgabe durch die Merkmale des Kennzeichens des Anspruchs 1. Durch das seitliche Andrücken in Verbindung mit der elastischen Druckkammer wird die Flexibilität des Abstreiferelements besser zur Wirkung gebracht, so dass es z.B. am Rand des Förderbandes weiter ausgelenkt wird als in der Bandmitte oder umgekehrt. Auf diese Weise kann insbesondere auch ein über die Förderbandbreite ungleichmäßiger Verschleiß des Abstreiferelements automatisch kompensiert werden.

Besonders zweckmäßig ist, dass der elastische Querabstreifer pneumatisch gegen das Gurtband beaufschlagt bzw. pressbar ist.

Besonders günstig ist es, wenn das Abstreifergehäuse in sich, insbesondere um 10° über seine Länge, verwunden ausgebildet ist.

Eine elastische Druckkammer kann zwischen Gehäuse und Abstreifer angeordnet sein.

Vorzugsweise besteht das Abstreiferelement aus Polyurethan oder Mehrschichtgummi und gegebenenfalls abrasivem Material mit eingegossenen, eingeklebten oder eingestreuten Keramikplättchen.

Die das Abstreiferelement beaufschlagende Druckkammer kann über eine Verbindungsleitung mit einem mit Regler versehenen Speicher verbunden sein.

Beispielweise Ausführungsformen sollen nun mit bezug auf die beiliegenden Zeichnungen näher erläutert werden, in denen
- **Figur 1**: zeigt einen auf einer Antriebstrommel liegenden Fördergurt mit Abstreifer, der nicht Teil der Erfindung ist;
- **Figur 2**: ist ein Schnitt durch eine Trommel mit Abstreiferelement;
- **Figur 3**: zeigt eine Einzelheit, die nicht Teil der Erfindung ist;
- **Figur 4**: zeigt eine alternative Befestigung des Abstreiferelements; und
- **Figur 5**: zeigt eine alternative Anstellmöglichkeit, die nicht Teil der Erfindung ist.

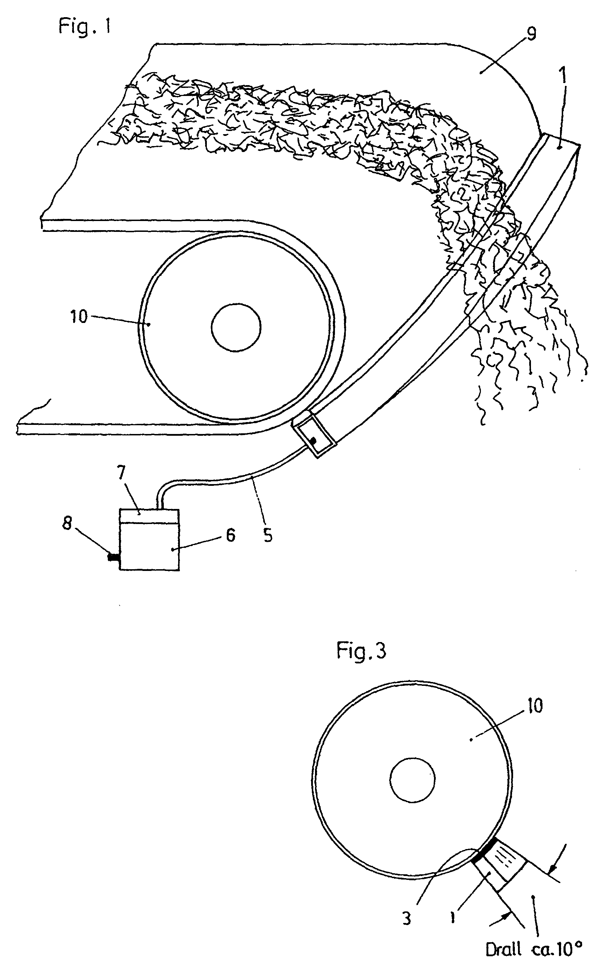

Nach Fig. 1 die nicht Teil der Erfindung ist läuft ein Gurtband 9 um eine Trommel 10, die ballig ausgebildet sein kann, aber nicht muß.

Vor Kopf befindet sich ein Abstreifer 1. Die Stellung ist als beispielsweise gezeichnet. Der Abstreifer kann weiter unten nach der Abwurfstelle angeordnet sein und pneumatisch gegen das Band drücken.

Man erkennt die Verwindung über die Länge des Abstreifers. Die Verwindung wird nach Bedarf über die Länge des Abstreiferelements gewählt und beträgt nach einem Ausführungsbeispiel z.B. 10°. Durch die Verwindung wird erreicht, daß auch Ungleichmäßigkeiten im Gurtband, weiterhin Fehler wie Vertiefungen kompensiert werden.

Die Druckkammer 2 des Abstreifers 1 ist über einen Verbindungsschlauch 5 mit dem Druckspeicher 6 verbunden. Die Regelung, beispielsweise auf einen Druck von 1 bar, erfolgt über den Regler 7 am Kopf des Druckspeichers 6. Bei 8 ist ein Füllanschluß am Druckspeicher 6 angedeutet.

Eine mögliche Verwirklichungsform des Abstreifers der nicht Teil der Erfindung ist in Fig. 1 gegeben. Innerhalb eines Abstreifergehäuses 1, das verwunden ist (im Maschinenbau sagt man auch: das Gehäuse hat einen Drall) befindet sich eine Druckkammer für ein pneumatisches oder hydraulisches Medium 4. Die Druckkammer 4 beaufschlagt das elastische Abstreiferelement 3. Das Abstreifergehäuse hat ein gegen den Gurt offenes Stahlprofil und kann an den beiden Enden geschlossen sein.

Eine mögliche Verwirklichungsform der Erfindung ist in Fig. 2 gegeben. Im vorliegenden Fall trägt das Abstreiferelment 3 kein Gehäuse mehr. Das Gehäuse ist durch ein Trägerprofil 1 ersetzt worden, das durch eine Senkschraube 11 mit dem Abstreiferlement 3 verbunden ist. Das Abstreiferelement 3 ist im Schnitt in etwa keilförmig ausgebildet, wobei die Außenseite des Keils durch die Senkschraube 11 am Trägerprofil 1 befestigt ist. Der Kopf der senkschraube lagert in einer Aussparung des Abstreiferelements, derart, daß die Schraube mit dem Trommelgurt 9 nicht in Berührung kommen kann. Auf dem Trägerprofil 1 sitzt ein Winkelprofil 12, innerhalb dessen in einer Druckkammer das Schlauchprofil 2 lagert. Die Außenseite des Winkelprofils ist über eine Stütze 14 mit dem Trägerprofil 1 verbunden.

Dies ist nur eine möglicher Verwirklichungsform. Im allgemeinen wird man die Teile 1, 14 und 12 als ein einziges Strangpreßprofil herstellen, wobei sich die Gestalt den Fertigungserfordernissen anpassen wird.

Es ist eine Einrichtung vorgesehen, die selbst dosierend einen insbesondere pneumatischen Anpreßdruck der Druckkammer 2 liefert, der sich immer bei gleicher Druckhöhe jeder Förderbandunebenheit anpaßt. Der beispielsweise von einem Kompressor belieferte Speicher 6 gibt immer konstanten Druck über den Regler 7 an die Druckkammer 2. Vergrößert sich die Form des Schlauchs in der Druckkammer 2 beispielsweise, so wird bis zum Erreichen des gleichen Drucks (beispielsweise 0,5 bar) entsprechend mehr Luft zugeregelt.

Fig. 3 die nicht Teil der Erfindung ist, läßt die Einzelheit erkennen, wie die Anstellung des Abstreiferlements 3, das vornehmlich elastisch ist, gegen das Gurtband und damit die Antriebstrommel der Förderbandanlage 10 drückt. Die Verwindung ist (mit der Bezeichnung Drall) mit ca. 10°, angegeben. Man ist nicht auf einige Grad festgelegt. Die die Abstreiferleistung erhöhende Verwindung verhindert zusätzlich insbesondere bei beschädigten oder geflickten sowie nicht einwandfrei überlappenden Endlosverbindungen die Bandbeschädigungen. Man erkennt weiterhin den Anschluß in der Stirnseite der Abstreifertasche.

Die als Beispiel gezeigte Druckkammer kann aber auch durch Zylinder oder ähnliche Ausbildungen ersetzt werden.

Für Sonderfälle kann es wichtig sein, anstelle von Luft oder Fluid ein inertes Medium wie Stickstoff oder ein Gemisch von Luft mit einem inerten Medium zu verwenden.

Anwendung findet ein solcher Abstreifer beispielsweise im Bergbau, in Kies- und Tongruben, in der Lebensmittel- oder Futtermittelindustrie oder beim Transport keramischer Massen, ohne daß die Anwendung hierauf beschränkt wäre.

Das Gehäuse für das Abstreiferelement kann nach einer anderen Ausführungsform auch nicht aus Stahl, sondern einem anderen Metall, genausogut aber auch (je nach Zweck) aus Kunststoff hergestellt sein. Wahlweise kann es auch aus mit Kunststoff belegtem Stahl hergestellt sein.

Das verwundene Halterprofil, das oben als Rinnenprofil bezeichnet wurde, kann auch als Rechtecktasche oder dergleichen bezeichnet werden.

Die Verwindung kann auch nach einer anderen Ausführungsform wahlweise bis zur Mitte ansteigen und auf der anderen Seite von der Mitte abfallend ausgebildet sein.

Der Verwindungsgrad wird der gestellten Aufgabe angepaßt. Der Verwindungsgrad kann zwischen 5 und 30° betragen.

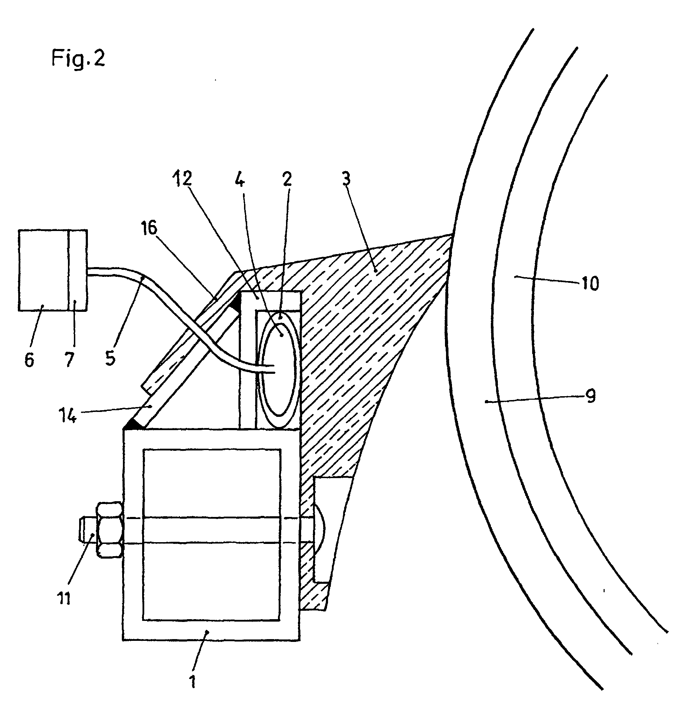

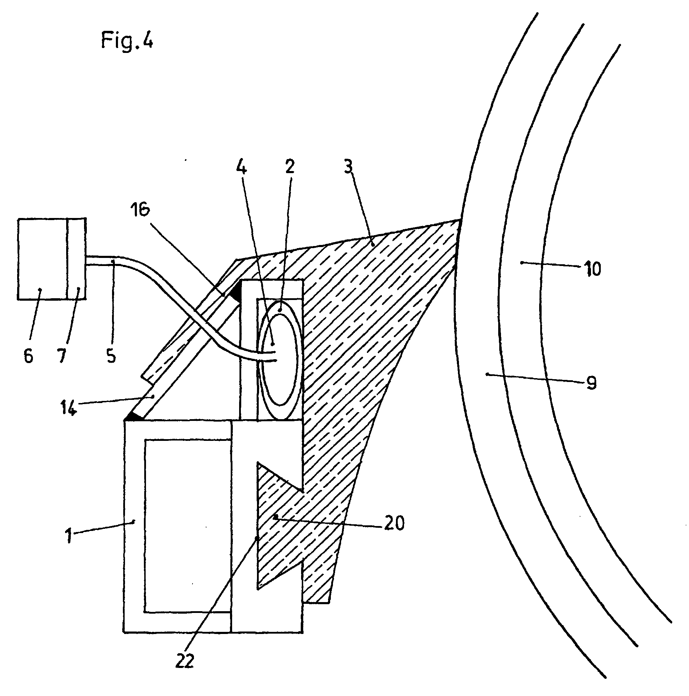

Die Verbindung mit der Senkschraube ist nicht zwingend. Gemäß Fig. 4 ist es auch möglich, eine rückseitige schwalbenschwanzförmige Halterung 20 des Abstreifelements in eine Schwalbenschwanznut 22 des Trägerprofils 1 einrasten zu lassen. Jede andere technisch sinnvolle Verbindung zwischen Abstreifelement 3 und Trägerprofil ist natürlich möglich. Das Abstreifelement 3 übergreift mit einer Schürze 16 die vorgenannte Stütze 14 und sichert so den Halt zwischen Abstreifelement 3; 16 und Trägerprofil (hier Winkelprofil und Stütze).

Aus Darstellungsgründen wurde die Befestigung des Abstreifelements relativ hoch angesetzt. In Praxis wird man das ganze Abstreifelement und das Trägerprofil weiter unten, bezogen auf die Trommel, anbringen.

Durch den selbst dosierenden, insbesondere pneumatischen Anpreßdruck wird sich immer gleich hoher Druck jeder Förderbandunebenheit anpassen, da der Regler 7 auf konstanten Druck regelt.

Die Druckkammer 2 kann aus einem Feuerwehrschlauch, beispielsweise außen textilbewehrt, wobei der Schlauch aus Elastomer/-Gummi besteht, hergestellt sein.

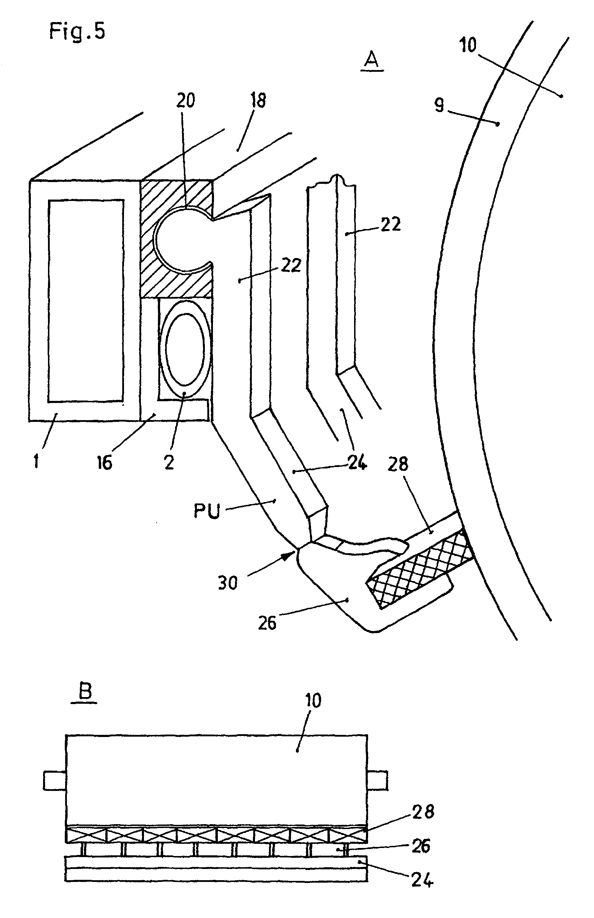

Fig. 5 die nicht Teil der Erfindung ist, zeigt eine alternative Anstellmöglichkeit. Hierbei ist an dem Stahlträger 1 des Querabstreifers eine Winkelschiene 16 starr befestigt, die die Druckkammer 2 trägt, die in Form des erwähnten Schlauches oder dergleichen ausgebildet ist. Weiter ist oben an dem Abstreifergehäuse 1 eine Positionierungsleiste 18 entweder aus Eisen oder aus PU befestigt und in dieser eine Art Kugelpfanne 20 für die Bildung eines Kugelgelenks mit dem vorstehenden Kugelkopf eines Armes 22 vorgesehen. Mehrere solcher Arme 22 sind längs der Leiste des Abstreifers angeordnet. Die zweite Leiste ist nur gebrochen dargestellt. Die Befestigung ist ähnlich. Längs des Abstreifergehäuses können viele solcher Arme vorgesehen sein. Die Arme 22 sind gegen die Trommel abgewinkelt (bei 24). Sie bestehen im wesentlichen aus PU. Es folgt dann eine Einschnürung 30, die bewußt die Verwindung in diesen Querschnitt legt. Eine weitere Abkröpfung ergibt den Armschenkel 26, in den Keramik 28 eingegossen oder eingeklebt ist. Die Arme sind also gleichzeitig elastisch und steif, bedingt durch das Material und die Form (Abkröpfungen mit bewußter Schwächungsstelle 30). Die Trommel ist wieder mit 10, das Förderband wieder mit 9 bezeichnet. Wurde der Schnitt mit A bezeichnet, dann ist die Stirnansicht der Trommel unten mit B bezeichnet. Die Bezugszeichen sind wie in den übrigen Figuren gewählt, soweit es sich um gleiche Elemente handelt.

Im Betrieb wird also die Druckkammer 2 wieder über den Regler gebläht und drückt die Arme 22, und damit deren Abkröpfungen sowie die am Ende vorgesehene Keramik 28, gegen das über die Trommel 10 laufende Förderband 9. Durch die Elastizität der Polyurethanarme werden die Keramikstücke elastisch gegen das Förderband gedrückt.

Es wird nicht verkannt, daß Querabstreifer (z.B. DE 40 38 187) einer Ausbildung bekannt sind, bei der ein Luftfederkissen einzelne Zwischenstücke beaufschlagt, die eine starre Reinigungsleiste gegen einen Fördergurt drücken. Unterschiedlicher Druck kann also nur von Segment zu Segment (von Zwischenstück zu Zwischenstück) aufgebracht werden. Die Reinigungsleiste paßt sich nicht der zu reinigenden Bandfläche an. Eine Druckregelung ist nicht vorgesehen. Der eigentliche Abstreifer wird bereits bei der Montage durch entsprechende Positionierung zum Band hin gedrückt. Ist die Antriebstrommel ballig, was ja ein Bandschieflauf vermeiden soll, dann sinkt die Reinigungsleistung dramatisch.

Bei der Konstruktion nach der Erfindung bleibt der Anpreßdruck stets gleich und erreicht dennoch eine gute und schonende Bandreinigung. Die Reinigungsleiste kann sich in ihrer ganzen Länge durchgehend an jeder Stelle der zu reinigenden Bandfläche anpassen.

Schließlich ist noch bekannt (US 5,121,829) direkt mit Preßluftbeaufschlagung zu reinigen.

## Patentansprüche

1. Vorrichtung zur Reinigung von stark verschmutzten Förderbändern mit einem quer zur Förderbandbewegung an dem Umkehrpunkt des Gurtes (9) oder kurz unterhalb dessen angeordneten fluidbeaufschlagten elastischen Querabstreifer der aus einem Trägergehäuse (1) mit einem elastischen Abstreiferelement (3) besteht, wobei eine elastische Druckkammer (2) zwischen Trägergehäuse (1) und Abstreiferelement (3) angeordnet ist, **dadurch gekennzeichnet, dass** das im Schnitt etwa keilförmige Abstreiferelement (3) außerhalb des Trägergehäuses (1) angeordnet und an ihm derart befestigt ist, dass sein dickerer Abschnitt durch die Druckkammer (2) seitlich an den Gurt (9) andrückbar ist.

2. Vorrichtung nach Anspruch 1, **dadurch gekennzeichnet, dass** der Querabstreifer eine der insbesondere ballig ausgeführten Umlenktrommel (10) folgende Gestaltung hat.

3. Vorrichtung nach Anspruch 1 oder 2, **dadurch gekennzeichnet, dass** der elastische Querabstreifer punktuell gleichmäßig pneumatisch gegen das Gurtband (9) pressbar ist.

4. Vorrichtung nach Anspruch 2, **dadurch gekennzeichnet, dass** das Trägergehäuse (1) in sich, insbesondere um 10°, über seine Länge verwunden ausgebildet ist.

5. Vorrichtung nach einem der vorhergehenden Ansprüche, **dadurch gekennzeichnet, dass** das Abstreiferelement (3) aus Polyurethan, Mehrschichtgummi und gegebenenfalls abrasivem Maerial mit eingegossenen und eingeklebten oder eingestreuten Keramikplättchen besteht.

6. Vorrichtung nach einem der vorhergehenden Ansprüche, **dadurch gekennzeichnet, dass** die das elastische Abstreiferelement beaufschlagende Druckkammer (2) über einen Verbindungsschlauch (5) mit einem mit Regler (7) versehenen Speicher (6) verbunden ist.

7. Vorrichtung nach Anspruch 1, **dadurch gekennzeichnet, dass** am Trägergehäuse (1) einerseits die Druckkammer (2), andererseits eine Positionierungsleiste (18) gehaltert sind, wobei über Gelenke (20) Arme (22) längs der Abstreiferleiste vorgesehen sind, die jeweils ein Keramiksegment (18) gehaltert sind, die jeweils ein Keramiksegment (28), gegebenenfalls unter Überlappung, gegen das Förderband (9) anstellen.

8. Verfahren zum Reinigen von stark verschmutzten Förderbändern mit einer Vorrichtung nach Anspruch 1, **dadurch gekennzeichnet, dass** an das Förderband (9) quer ein mit Druckluft beaufschlagter elastischer Abstreifer (3) gepresst wird.

## Claims

1. Device for cleaning heavily soiled conveyor belts, having a resilient, fluid-loaded transversely acting stripper which is arranged transversely with respect to the movement of the conveyor belt, at the point of reversal of the belt (9) or shortly below said point, and comprises a support housing (1) with a resilient stripper element (3), a resilient pressure chamber (2) being arranged between the support housing (1) and stripper element (3), **characterized in that** the stripper element (3), which is approximately wedge-shaped in section, is arranged outside the support housing (1) and is fixed thereto such that its thicker portion can be pressed laterally against the belt (9) by the pressure chamber (2).

2. Device according to Claim 1, **characterized in that** the transversely acting stripper has a shape which follows the deflection drum (10), which may in particular be of crowned design.

3. Device according to Claim 1 or 2, **characterized in that** the resilient transversely acting stripper can be pressed uniformly point by point and pneumatically against the belt (9).

4. Device according to Claim 2, **characterized in that** the support housing (1) is designed to be inherently twisted, especially by 10°, over its length.

5. Device according to one of the preceding claims, **characterized in that** the stripper element (3) is composed of polyurethane, multi-layer rubber and, if appropriate, abrasive material with ceramic platelets cast in and adhesively bonded in or scattered in.

6. Device according to one of the preceding claims, **characterized in that** the pressure chamber (2) that loads the resilient stripper element is connected via a connecting hose (5) to a reservoir (6) provided with regulator (7).

7. Device according to Claim 1, **characterized in that** the pressure chamber (2) is held on one side of the support housing (1), and a positioning bar (18) is held on the other side, arms (22) being provided, via hinges (20), along the stripper bar, said arms each adjusting a ceramic segment (28) toward the conveyor belt (9), if appropriate with an overlap.

8. Method of cleaning heavily soiled conveyor belts using a device according to Claim 1, **characterized in that** a resilient stripper (3) loaded by compressed air is pressed transversely against the conveyor belt (9).

## Revendications

1. Dispositif de nettoyage de bandes transporteuses fortement salies avec une racle transversale élastique chargée par un fluide, disposée transversalement au déplacement de la bande transporteuse au point de renvoi de la bande (9) ou peu en dessous de celui-ci, qui est constitué d'un boîtier de support (8) avec un élément de raclage élastique (3), où une chambre de pression élastique (2) est disposée entre le boîtier de support (1) et l'élément de raclage (3), **caractérisé en ce que** l'élément de raclage (3), en coupe à peu près en forme de coin, est disposé à l'extérieur du boîtier de support (1) et est fixé à celui-ci de façon que son tronçon plus épais peut être appliqué par la chambre de pression (2) latéralement à la bande (9).

2. Dispositif selon la revendication 1, **caractérisé en ce que** la racle transversale est d'une configuration adaptée notamment au tambour de renvoi (10) réalisé d'une manière bombée.

3. Dispositif selon la revendication 1 ou 2, **caractérisé en ce que** la racle transversale élastique peut être appliquée par pression ponctuellement régulièrement pneumatiquement à la bande (9).

4. Dispositif selon la revendication 2, **caractérisé en ce que** le boîtier de support (1) est réalisé en étant tordu en tant que tel, notamment selon 10°, sur sa longueur.

5. Dispositif selon l'une des revendications précédentes, **caractérisé en ce que** l'élément de raclage (3) est constitué de polyuréthane, de caoutchouc multicouches et le cas échéant d'un matériau abrasif avec des plaquettes céramiques introduites par coulage et collage ou dispersion.

6. Dispositif selon l'une des revendications précédentes, **caractérisé en ce que** la chambre de pression (2) chargeant l'élément de raclage élastique est reliée par un tuyau de liaison (5) à un réservoir de stockage (6) pourvu d'un régulateur (7).

7. Dispositif selon la revendication 1, **caractérisé en ce que** sont retenues au boîtier de support (1), d'une part, la chambre de pression (2), d'autre part, une baguette de positionnement (18), où, par des articulations (20), des bras (22) sont prévus le long de la baguette de raclage qui retiennent chacun un segment céramique (18), qui appliquent chacun un segment céramique (28), le cas échéant avec un chevauchement, à la bande transporteuse (9).

8. Procédé de nettoyage de bandes transporteuses fortement salies avec un dispositif selon la revendication 1, **caractérisé en ce qu'**il est appliqué par pression transversalement à la bande transporteuse (9) une racle élastique (3) chargée en air comprimé.
